(19) Europäisches Patentamt / European Patent Office / Office européen des brevets

(11) **EP 4 167 708 B1**

(12) **EUROPEAN PATENT SPECIFICATION**

(45) Date of publication and mention
of the grant of the patent:
**03.12.2025 Bulletin 2025/49**

(21) Application number: **21826048.7**

(22) Date of filing: **16.06.2021**

(51) International Patent Classification (IPC):
***G05D 1/00*** *(2024.01)*  ***A01B 69/00*** *(2006.01)*

(52) Cooperative Patent Classification (CPC):
**G05D 1/0278; A01B 69/004**

(86) International application number:
**PCT/CA2021/050820**

(87) International publication number:
**WO 2021/253121 (23.12.2021 Gazette 2021/51)**

(54) **SYSTEM AND METHOD FOR CONTROLLING AN AGRICULTURAL TOOL TOWED BY A PIVOTALLY ATTACHED VEHICLE BASED ON FUTURE PATH PREDICTION**

SYSTEM UND VERFAHREN ZUR STEUERUNG EINES VON EINEM SCHWENKBAR BEFESTIGTEN FAHRZEUG GEZOGENEN LANDWIRTSCHAFTLICHEN WERKZEUGS AUF DER BASIS VON ZUKÜNFTIGER WEGVORHERSAGE

SYSTÈME ET PROCÉDÉ DE COMMANDE D'UN OUTIL AGRICOLE REMORQUÉ PAR UN VÉHICULE FIXÉ DE MANIÈRE PIVOTANTE SUR LA BASE D'UNE PRÉDICTION DE TRAJECTOIRE FUTURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.06.2020 US 202063040914 P**

(43) Date of publication of application:
**26.04.2023 Bulletin 2023/17**

(73) Proprietor: **VADERSTAD INDUSTRIES INC.**
**Langbank, SK S0G 2X0 (CA)**

(72) Inventors:
• **MEYER, Andrew Thomas**
**Wawota, Saskatchewan S0G 5A0 (CA)**
• **ZIETZ, John M.**
**Horace, North Dakota 58047 (US)**

(74) Representative: **AWA Sweden AB**
**Junkersgatan 1**
**582 35 Linköping (SE)**

(56) References cited:
**EP-A1- 3 364 265**   **WO-A1-2020/016677**
**US-A1- 2008 195 268**   **US-A1- 2012 215 410**
**US-A1- 2014 277 954**   **US-A1- 2017 112 049**
**US-B2- 8 190 364**   **US-B2- 9 374 939**

**Description**

**FIELD OF THE INVENTION**

The invention relates to computer-implemented systems and methods, and computer-program products for controlling an agricultural tool (e.g., a seed and fertilizer dispenser) towed by a pivotally attached vehicle (e.g., a tractor). The invention may be used in sectional control technology (SCT) to avoid rework of land, skipping of unworked land by the tool, and to compensate for different velocities of laterally spaced-apart implements of the tool.

**BACKGROUND OF THE INVENTION**

A variety of agricultural operations are performed using an agricultural tool towed by a pivotally attached vehicle. Seeding and fertilizing are examples. As the vehicle moves along the land, the tool may either overlap or skip previously seeded and fertilized land, resulting in inefficient operation, suboptimal distribution of seed and fertilizer, and unintended disturbance of the previously seeded and fertilized areas. US 9374939 B2 relates to a system and method for steering of an implement on sloped ground. US 2008/195268 A1 relates to an implement control system and method. US 8190364 B2 relates to a system and method for providing towed implement compensation. EP 3364265 A1 relates to a method for controlling an agricultural implement pulled by a tractor.

This undesirable reworking and skipping of land can be reduced by a sectional control technology (SCT) that selectively and automatically actuates the tool depending on its geographic position. An example is the Applicant's Seed Hawk™ air seeder cart and toolbar system (Vaderstad North America; Langbank, Saskatchewan, Canada), which meters particulate dispensing tools, and varies the elevation of ground opening tools, depending on their geographic position.

The vehicle and tool move at significant speed over the land, and the full actuation of the tool takes a discrete amount of time. Therefore, an SCT may use "look ahead" technologies to predict the future position of the tool. The predicted future position of the tool is used to determine when to start actuation of the tool so that the tool is fully actuated by the time the tool reaches a boundary between seeded and unseeded areas of land.

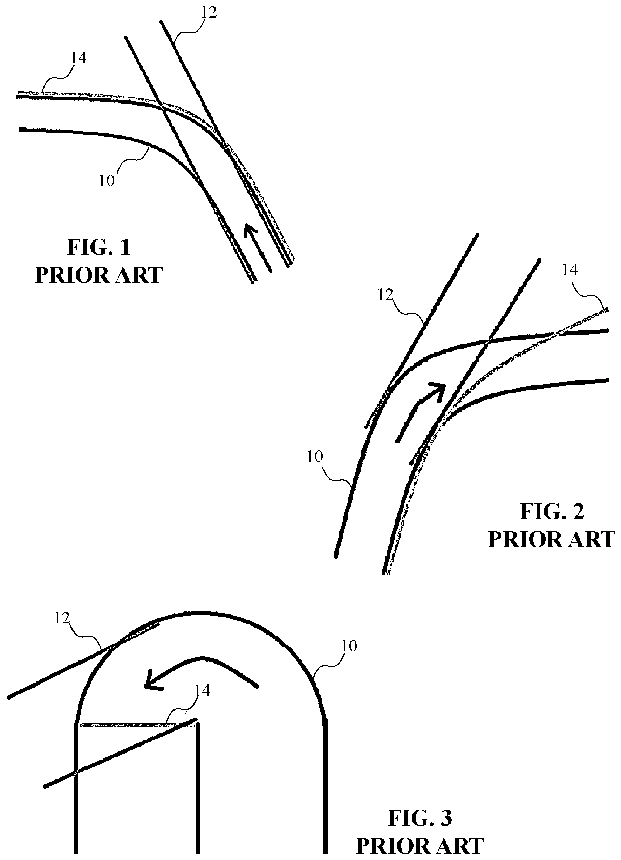

In this regard, the tool's future position may be predicted by a "straight ahead" approach. This approach projects the tool's current position in a straight line based on the tool's velocity and position, as determined from positional data received solely from a GPS receiver attached to the tool. This "straight ahead" approach is effective when the tool moves in a straight path, but is problematic when the tool moves in a curved path, as illustrated by the cases shown in Figures 1 to 3. In each case, the "straight ahead" approach results in an error between the tool's actual path 10 and the predicted path 12. This may lead to the SCT actuating the tool either too soon or too late in advance of the approaching a boundary 14 between areas of unworked and worked land.

Another problem associated with travel of the tool along a curved path is that tool implements that are spaced apart in the lateral direction (i.e., perpendicular to the direction of travel) will move at different speeds relative to the land. In the case where the tool implements dispense material (e.g., seed and/or fertilizer) on the land, the amount of material dispensed per unit length of land will therefore vary between the tool implements unless they are controlled to compensate for this phenomenon. Swedish patent no. 536166 C2 (2012-12-23; Gilstring et al.) discloses an agricultural tool having a sensor for detecting rotation of the tool in the horizontal plane. Based on detected rotation, a control unit controls the tool implements so that they provide a substantially constant output of material per unit length. However, the sensor detects the rotation of the tool occurring at a particular time instance. Latency (i.e., time lag) between that time instance and actuation of the tool may result in the tool implement being actuated either too soon or too late.

Accordingly, there remains a need in the art for alternative technologies to control an agricultural tool towed by a pivotally attached vehicle, particularly when the vehicle is moving in a curved path.

**SUMMARY OF THE INVENTION**

The invention is defined by the appended claims. In one aspect, the present invention comprises a method for controlling an agricultural tool towed by a pivotally attached vehicle. The method comprises the following steps:

(a) storing a model comprising:

(i) a modeled vehicle position and heading ($p_{v,n-1}$, $h_{v,n-1}$) at an initial time; and
(ii) a modeled tool position and heading ($p_{t,n-1}$, $h_{t,n-1}$) at the initial time;

(b) at or after the initial time, receiving positional data from a first GPS receiver attached to the vehicle so as to move in unison with the vehicle;
(c) calculating a vehicle velocity ($v_v$), wherein velocity is a rate of change of position per unit time, and a vehicle rate of change in heading per unit time ($r_v$) based on the positional data received from the first GPS receiver;

(d) updating the model by calculating:

(i) a modeled vehicle position and heading ($p_{v,n}$, $h_{v,n}$) at a future time, wherein $p_{v,n}$ is based on $p_{v,n-1}$ and $v_v$, and wherein $h_{v,n}$ is based on $h_{v,n-1}$ and $r_v$;

(ii) a modeled tool position and, optionally, heading ($p_{t,n}$, $h_{t,n}$) at the future time, wherein $p_{t,n}$ is based on ($p_{t,n-1}$, $h_{t,n-1}$) and ($p_{v,n}$, $h_{v,n}$), and wherein $h_{t,n}$ is based on $h_{t,n-1}$ and ($p_{v,n}$, $h_{v,n}$); and

(e) generating a control signal for controlling an actuator associated with the tool, wherein the control signal is based on $p_{t,n}$.

In an embodiment of the method, the control signal is further based on $h_{t,n}$.

In any foregoing embodiments of the method, the method further comprises, at or after the initial time, receiving positional data from a second GPS receiver attached to the tool so as to move in unison with the tool. In step (d)(ii), $p_{t,n}$ is further based on a tool position (pt) determined from the positional data received from the second GPS receiver, and $h_{t,n}$ is further based on a tool heading (ht) determined from the positional data received from the second GPS receiver.

In any foregoing embodiments of the method, in step (d)(i), $p_{v,n}$ is further based on a vehicle position ($p_v$) determined from the positional data received from the first GPS receiver, and $h_{v,n}$ is further based on a vehicle heading ($h_v$) determined from the positional data received from the first GPS receiver.

In another aspect, the present invention comprises a system for controlling an agricultural tool towed by a pivotally attached vehicle. The system comprises a first GPS receiver attached to the vehicle, and optionally (if required) a second GPS receiver attached to the tool. The system comprises a processor operatively connected to the first GPS receiver to receive positional data therefrom, and to the (optional) second GPS receiver to receive positional data therefrom. The system comprises a memory comprising a tangible, non-transitory computer readable medium storing instructions readable by the processor to implement any one or a combination of the embodiments of the method as described above.

In another aspect, the present invention comprises a computer program product for controlling an agricultural tool towed by a pivotally attached vehicle. The computer program product comprises a tangible, non-transitory computer readable medium storing instructions readable by a processor operatively connected to a first GPS receiver attached to the vehicle, and optionally (if required) to a second GPS receiver attached to the tool, to implement any one or a combination of the embodiments of the method as described above.

In comparison with prior art sectional control technologies that assume that the vehicle and tool are moving together in straight path, the present invention may allow for more accurate control of the tool when the vehicle and tool are moving along a curved path. This is because the present invention accounts for the effect of the velocity and turn rate of the vehicle towing the tool, in determining the modeled position of the tool at the future time. This velocity and turn rate may differ from that of the tool because of the pivotal connection between them. Further, by predicting the position of the tool at multiple future time instances, the velocity of the tool may also be predicted. The predicted velocity of the tool may be used as a basis for controlling the tool. This may permit better results than prior art sectional control technologies that consider only the instantaneous velocity of the tool.

## BRIEF DESCRIPTION OF THE DRAWINGS

In the drawings, which form part of the specification, like elements may be assigned like reference numerals. The drawings are not necessarily to scale, with the emphasis instead placed upon the principles of the present invention. Additionally, each of the embodiments depicted are but one of a number of possible arrangements utilizing the fundamental concepts of the present invention.

Figures to 1 to 3 show the "straight ahead" predicted path of an agricultural tool in relation to a boundary between unworked and worked areas of land, and an actual travel path including a convex curve to the boundary (Figure 1), a concave curve to the boundary (Figure 2), and a 180 degree turnaround at a headland boundary (Figure 3).

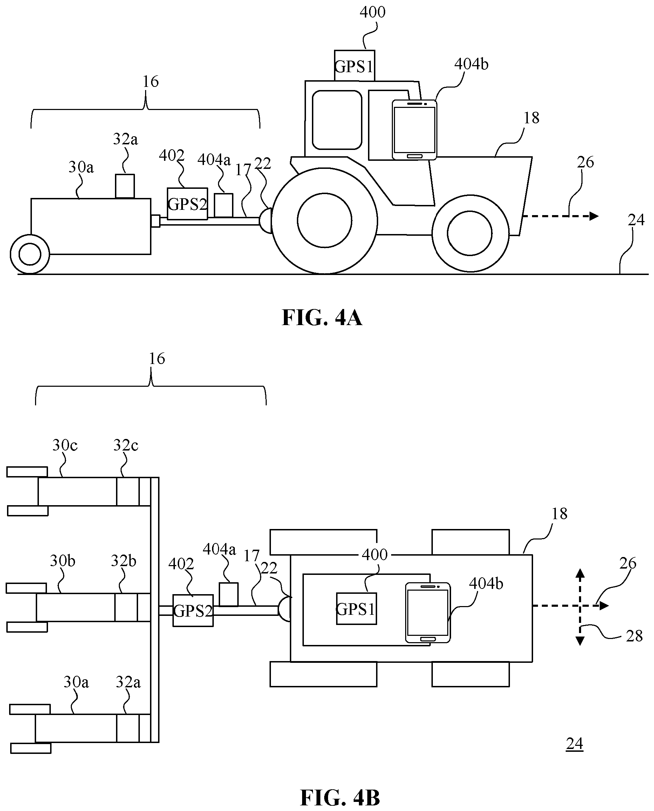

Figure 4A (side elevation view) and Figure 4B (top plan view) are schematic depictions of an embodiment of a system of the present invention for predicting a future position of an agricultural tool towed by a pivotally attached vehicle, in relation to the tool and vehicle.

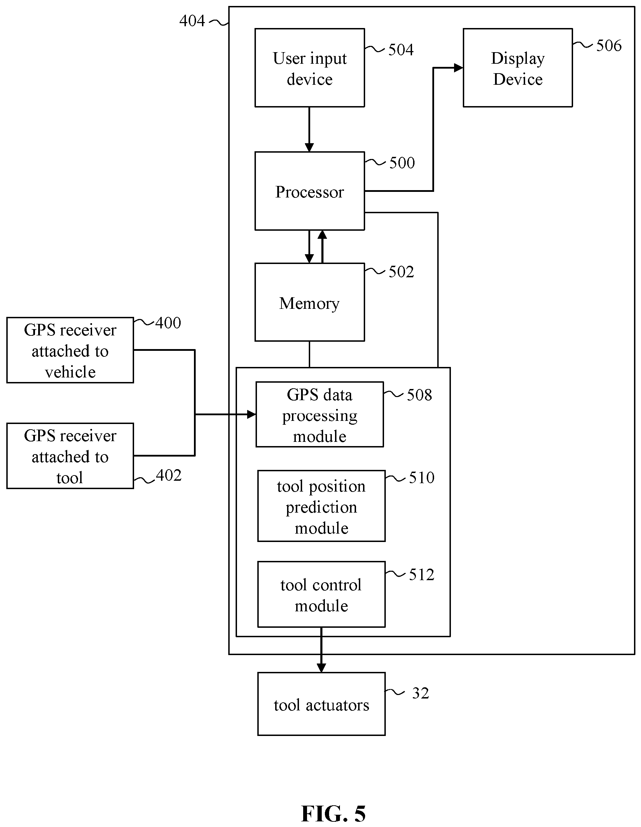

Figure 5 is a functional block diagram of an embodiment of a system of the present invention for predicting a future position of an agricultural tool towed by a pivotally attached vehicle.

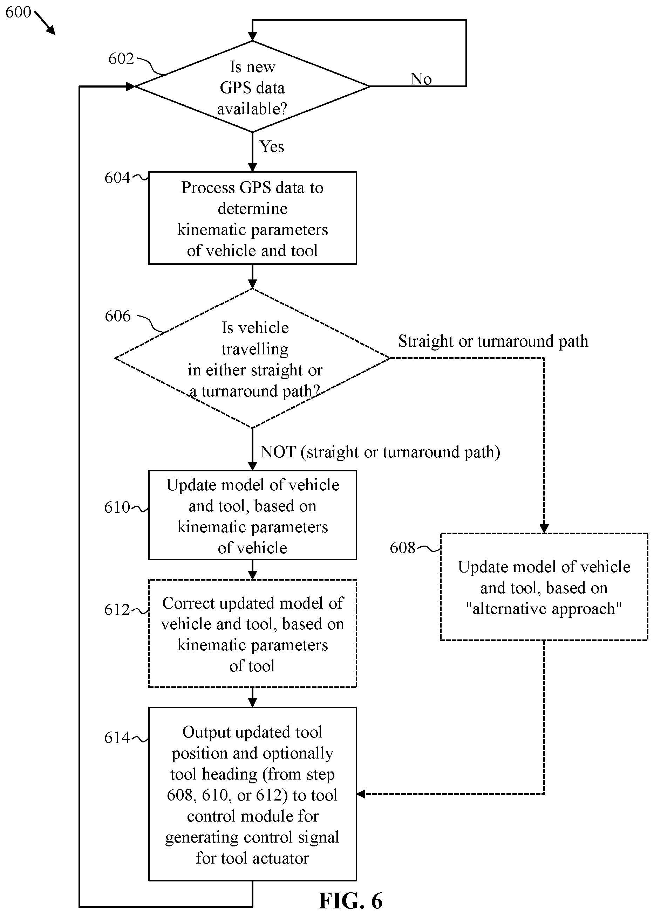

Figure 6 is a flow chart of an embodiment of a method of the present invention for predicting a future position of an agricultural tool towed by a pivotally attached vehicle.

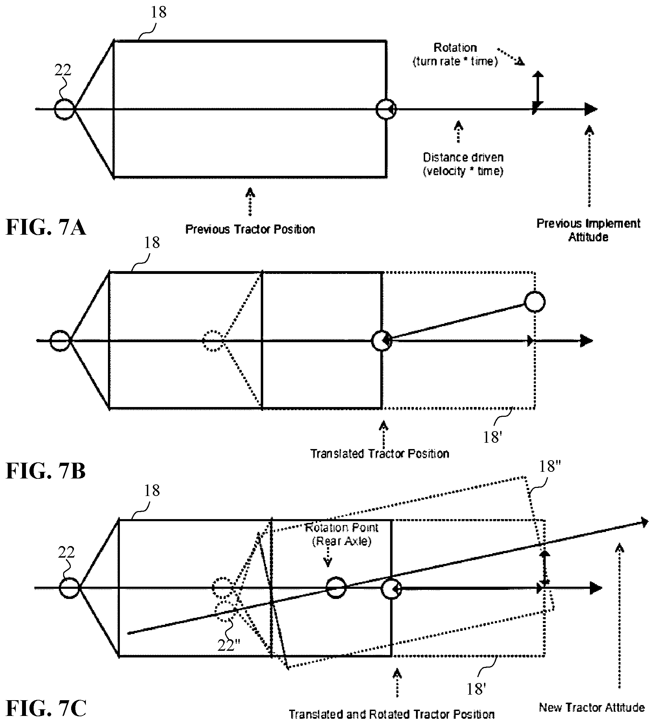

Figures 7A to 7C show plan views of an embodiment of updating a modeled fixed-axle vehicle from an initial position and heading (Figure 7A), to an updated position (Figure 7B), and finally to an updated heading (Figure 7C), in the method of Figure 6.

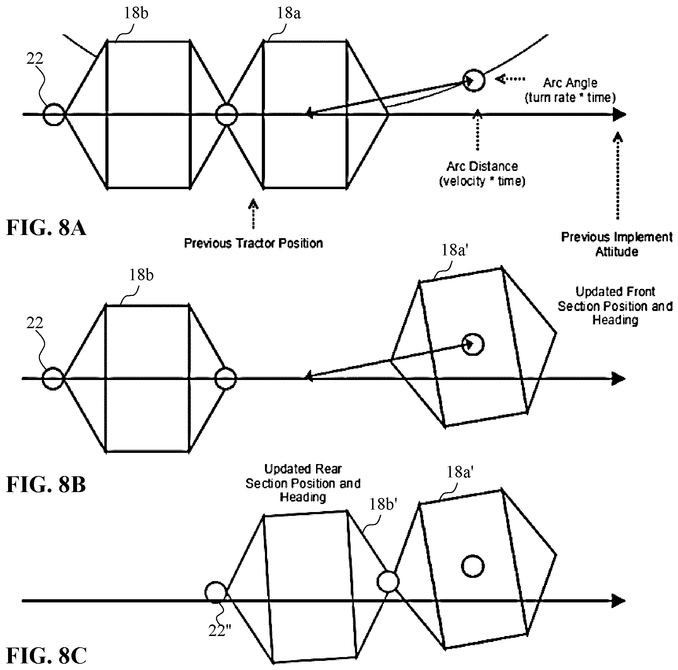

Figures 8A to 8C show plan views of an embodiment of updating a modeled articulated two-section vehicle from an initial position and heading (Figure 8A), to an updated position and heading of the front section of the tractor (Figure 8B), and an updated heading and position of the rear section of the vehicle (Figure 8C), in the method of Figure 6.

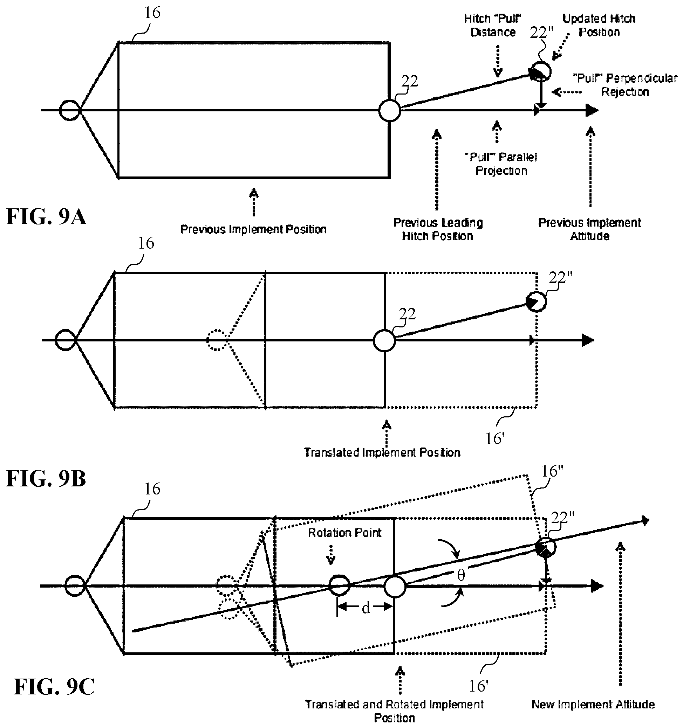

Figures 9A to 9C show plan views of an embodiment of updating a modeled agricultural tool from an initial position and heading (Figure 9A), to an updated position (Figure 9B), and finally to an updated heading (Figure 9C), in the method of Figure 6.

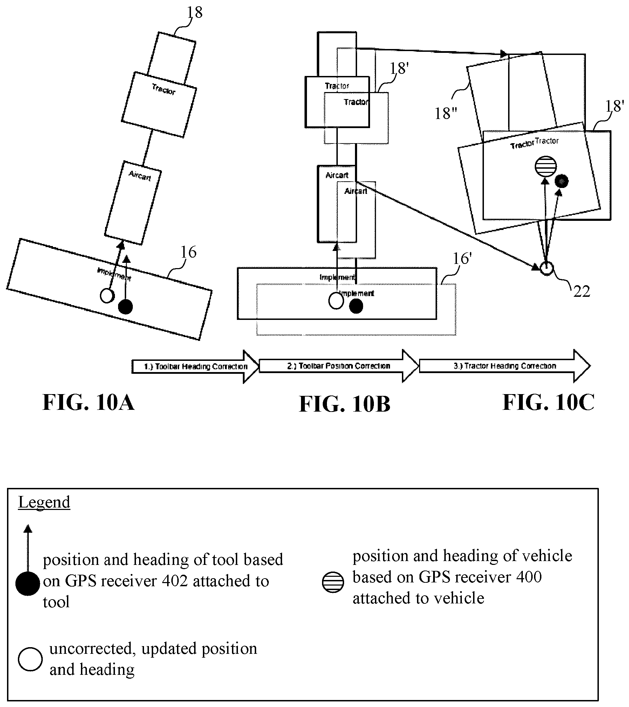

Figures 10A to 10C show plan views of an embodiment of correcting an updated model of a vehicle and an agricultural tool from an uncorrected position (Figure 10A) to a corrected heading and position of the tool (Figure 10B), and further a corrected heading and position of the vehicle (Figure 10C).

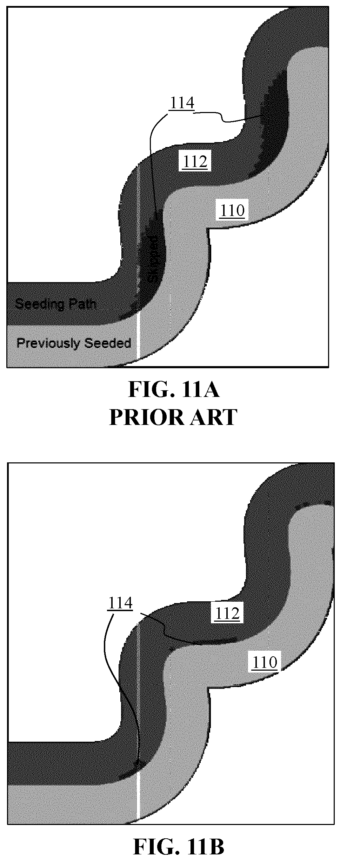

Figure 11A and 11B show plan views of an embodiment of a seeding simulation using a section control technology (SCT) that implements a "straight ahead" approach (Figure 11A) and the method of the present invention (Figure 11B) to predict the future position of the seeding tool.

## DETAILED DESCRIPTION OF EMBODIMENTS OF THE INVENTION

*Definitions.*

The invention relates to computer-implemented systems and methods, and computer-program products for controlling an agricultural tool that is towed by a pivotally attached vehicle. Any term or expression not expressly defined herein shall have its commonly accepted definition understood by a person skilled in the art. As used herein, the following terms have the following meanings.

"Agricultural tool" refers to any device that is used for cultivating or harvesting plants. Non-limiting examples of agricultural tools include devices for seeding, planting, fertilizing, spraying, irrigating, drying, ploughing, tilling, rolling, mowing, raking, picking, harvesting, and bailing.

"Vehicle" refers to any machine that can be used to tow an agricultural tool across land. Non-limiting examples of vehicles include tractors and trucks. A vehicle may be operated manually by a human, or operated in a partly or fully autonomous manner.

"GPS receiver" refers to a device that includes an antenna for receiving data signals from an orbiting satellite navigation system, and an operatively connected processor for processing such data signals to determine a geographic position of the GPS receiver. The term "GPS receiver" is not limited by any particular satellite navigation system, with illustrative examples being the Global Positioning System (GPS), GLONASS, Galileo, and BeiDou systems, as known in the art. GPS receivers are known to persons skilled in the art, and do not by themselves constitute the present invention.

"Memory" refers to a non-transitory tangible medium for storing information in a format readable by a processor, and/or instructions readable by a processor to implement an algorithm. Non-limiting types of memory include solid-state, optical, and magnetic computer readable media. A memory may comprise a plurality of operatively connected, physically discrete devices, despite use of the term "memory" in singular form. Instructions stored by a memory may be based on a plurality of programming languages known in the art, with non-limiting examples including the C, C++, Python, MATLAB, and Java programming languages.

"Processor" refers to an electronic device that is capable of reading or processing data stored on a memory or provided in a data signal, and/or executing instructions stored on a memory to perform an algorithm. Non-limiting examples of processors include devices referred to as microprocessors, microcontrollers, central processing units (CPU), and digital signal processors. A processor may comprise a plurality of operatively connected, physically discrete devices, despite use of the term "processor" in singular form.

"Based on", as used in the context of calculating a first parameter "based on" a second parameter, refers to calculating the first parameter either directly using the second parameter, or indirectly using a parameter derived from the second parameter. "Based on" includes determining the first parameter using parameters additional to the second parameters.

*Agricultural tool and vehicle.*

Figures 4A and 4B show a side elevation view and top view, respectively, of an embodiment of an agricultural tool 16 towed by a pivotally attached to a vehicle 18, to which the system of the present invention is applied. In this example, tool 16 is supported by a rear set of wheels, and vehicle 18 is a wheeled tractor. Tool 16 includes a toolbar 17 pivotally attached to a hitch 22 at the rear of vehicle 18. Accordingly, as vehicle 18 travels in a curved path on substantially horizontal land 24, tool 16 and vehicle 18 may pivot relative to each other about a substantially vertical axis. The configuration of tool 16 and vehicle 18 shown in Figure 4 is non-limiting of the present invention. For instance, tool 16 may be indirectly attached to vehicle 18 with an intervening apparatus between them, such as an air seeder cart.

The present invention may be adapted for use with a tool having a plurality of implements 30a to 30c attached to common toolbar 17. In Figure 4B, three implements 30a to 30c are shown, but the present invention is not limited by the number of implements. Such implements 30a to 30c may be spaced apart from each other in the primary direction of travel (hereinafter, the "longitudinal direction"), as denoted by dashed arrow line 26 in Figures 4A and 4B, or in the horizontal direction perpendicular thereto (hereinafter, the "lateral direction"), as denoted by dashed arrow line 28 in Figure 4B. For example, each of the plurality of implements 30a to 30c may include a particulate material dispensing implement for depositing seed and/or fertilizer on the land 24, and an associated ground opening implement for forming a furrow to receive the seed and/or fertilizer. Moreover, each of the plurality of implements 30 to 30c may be associated with a tool actuator 32a to 32c for affecting the operation of the implements 30a to 30c, either independently or collectively of other implements 30a to 30c. For example, the tool actuators 32a to 32c may be an electromechanical or hydraulic actuator that selectively varies the position of a valve in a supply line for seed and/or fertilizer to a particulate material dispensing implement, or that selectively lowers and raises a ground opening implement relative to the land 24.

System for controlling an agricultural tool.

Figures 4A and 4B show the system of the present invention in relation to tool 16 and vehicle 18. In this embodiment, the system includes a first GPS receiver 400, a second GPS receiver 402, and a computer unit 404.
The purpose of GPS receiver 400 and GPS receiver 402 is to receive satellite navigation signals, and generate positional data indicative of the geographic position of vehicle 18 and tool 16, respectively. Accordingly, GPS receiver 400 is attached to vehicle 18 in such manner that they move in unison with each other, while GPS receiver 402 is attached to tool 16 in such manner that they move in unison together. In Figures 4A, for example, GPS receiver 400 is mounted on the cab of vehicle 18, while GPS receiver 402 is mounted on toolbar 17 of tool 16. (It is assumed that toolbar 17 and ground working portions of the tool 16 are substantially fixed in position relative to each other.) GPS receiver 400 and 402 may preferably be mounted at or near the center of rotation of vehicle 18 and tool 16, respectively, for reasons that will be apparent from the description of the associated method. However, this is not essential as it is possible to computationally account for any spatial separation between these positions.
The purpose of computer unit 404 is to receive positional data from GPS receivers 400, 402, and predict the future position of the tool 16 based on such positional data. Accordingly, computer unit 404 is operatively connected to GPS receivers 400, 402 to receive such positional data, via wired or wireless data connections (e.g., Bluetooth, and the like). As a non-limiting example, computer unit 404 may be implemented collectively by a computer unit 404a and a tablet computer 404b. Computer unit 404a may include a microprocessor. Tablet computer 404b may include a processor running an iOS™ or Android™ operating system. Computer unit 404a and tablet computer 404b are operatively connected to each other for data communication (e.g., by a wired or wireless communication path), and are further specifically configured with a software application to implement the method of the present invention. (The software may be encoded by suitable programming languages known in the art.) Computer unit 404a is attached to toolbar 17, and receives and processes positional data from GPS receivers 400, 402. Tablet computer 404b is situated in the cab of the vehicle 18, and displays map data for visualization by an operator of tractor 18. In other embodiments, computer unit 404 may be partly or wholly situated remotely from vehicle 18.
Figure 5 shows a functional block diagram of an embodiment of the system of the present invention, including GPS receivers 400, 402, and computer unit 404. Computer unit 404 includes a processor 500 and an operatively connected memory 502. Processor 500 reads instructions stored on memory 502 to execute a method of the present invention for predicting the future position of tool 16. Memory 502 (i.e., a non-transitory computer readable medium) storing the instructions for the method may be independently considered to be a computer program product of the present invention. Computer unit 404 may optionally include one or more user input devices 504 (e.g., computer keyboard, mouse, or touch screen) to allow a human user to configure parameters of the method. Computer unit 404 may optionally include one or more display devices 506 (e.g., a display monitor) to generate human readable output, such as alarms and other information for monitoring implementation of the method.
In Figure 5, hardware components (i.e., processor 500 and memory 502) and software components (the instructions stored on memory 502) are conceptualized as operatively connected functional modules 508 to 512. The purpose of GPS data processing module 508 is to receive position data from GPS receivers 400, 402. The purpose of tool position prediction module 510 is to predict the future position of tool 16 based on the received position data. The purpose of tool control module 512 is to control one or more operatively connected tool actuators 32 (e.g., tool actuators 32a to 32c shown in Figure 4B), based on the predicted future position of tool 16, and optionally also the predicted future heading of tool 16, and a set of rules. Examples are of such control are discussed in the below description of the associated method.

**Method for controlling the agricultural tool.**

Figure 6 shows a flow chart of an embodiment of a method 600 of the present invention for predicting a future position of the tool 16 towed by the pivotally attached vehicle 18, with optional steps shown in dashed lines.

In an exemplary use, method 600 is implemented in as near "real time" as possible during operation of tool 16 and vehicle 18, as part of a sectional control technology (SCT). Continuous and rapid receipt and processing of positional data generated by GPS receivers 400, 402, without human intervention, is imperative to effectively implement the SCT. Accordingly, computer-based implementation of method 600 is essential.

Method 600 is premised on storing in memory 502 a numerical model describing vehicle 18 and tool 16, in relation to a notional two-dimensional horizontal plane. The model may be defined by "kinematic parameters" of each of vehicle 18 and tool 16: position (p); heading (h); velocity (v); and turn rate (r). Position (p) refers to a two-dimensional position in this plane. Heading (h) refers to a direction (bearing) on the plane, which may be defined by an angle relative to a fixed reference axis in the plane. Velocity (v) refers to a rate of change of position per unit time interval. Turn rate (r) refers to a rate of change in heading per unit time interval. Kinematic parameters of vehicle 18 and tool 16 may be differentiated by subscripts "v" and "t", respectively. Kinematic parameters at successive time instances may be differentiated by subscripts "n-1" and "n", denoting an "initial time" and a "future time", respectively.

Method 600 is performed periodically at successive time instances. The frequency of repeating the method may be practically limited only by the sample rate of GPS receivers 400, 402, and the computational capabilities of the computer unit 404. As a non-limiting example, method 600 may be repeatedly performed at about 5 Hz.

*Step 602.*

Method 600 begins with GPS data processing module 508 receiving GPS measurements from GPS receivers 400, 402. At step 602, the method checks whether new GPS position data is available from GPS receivers 400, 402. If no new GPS data is available, then the method returns to step 602 and continues to do so until new GPS data is available. If new GPS data is available, then the method continues with step 604.

*Step 604.*

At step 604, tool position prediction module 510 processes the GPS position data received from GPS receivers 400, 402 to determine kinematic parameters for vehicle 18, and the tool 16, respectively. In doing so, the method may optionally correct the GPS position data for the attitude (i.e., the tilt or pitch) of GPS receivers 400, 402. Further, the method may optionally correct the GPS position data for spatial separation between GPS receivers 400, 402 on vehicle 18 or tool 16, and the rotational center of vehicle 18 or tool 16, respectively.

The determined kinematic parameters of vehicle 18 and tool 16 include their respective position (p), and heading (h). The determined kinematic parameters of vehicle 18 also include its velocity (v), and turn rate (r). It will be appreciated that the determination of heading (h), velocity (v), and turn rate (r) will require processing GPS position data received at multiple times, separated by known time intervals. The determination of the kinematic parameters based on GPS position data is within the skill of the person of ordinary skill in the art. For example, heading (h) can be determined from the angle of a directional vector between two time-separated positions (p). Velocity (v) can be determined by dividing the distance between two time-separated positions (p) by a known time interval between the two time-separated positions. Turn rate (r) can be determined by dividing a change between two time-separated headings (h) by a known time interval between the two time-separated headings. The known time interval may be measured using a computer clock of computer unit 404.

*Steps 606 and 608.*

At optional step 606, the method checks if vehicle 18 is travelling in a straight path, or in a 180 degree turnaround path (e.g., as shown in Figure 3). If either is true, then the method proceeds to step 608 to update the tool model using an alternative approach. The term "alternative approach" as used herein refers to any approach that is different from the approach taken in steps 610 and 612. The rationale for using an alternative approach in these particular cases is that the alternative approach may be more computationally efficient or stable, or produce less spurious results, than the approach taken in steps 610 and 612.

At optional step 606, checking of whether vehicle 18 is travelling in a straight line can be based on comparing one or more kinematic parameters of vehicle 18 and tool 16 to predetermined thresholds. As a non-limiting example, the heading of vehicle 18 ($h_v$) may be subtracted from the heading of tool 16 ($h_t$) to determine their deviation (i.e., "articulation") over a particular time interval (e.g., 2 seconds). Further, the average turn rate of tool 16 (rt) may be computed over the same time interval. For example, the method may deem vehicle 18 to be travelling in a straight line if both conditions 1 and 2 are satisfied, over the time interval (e.g., 2 seconds).

$$\text{Is 'articulation'} < 5 \text{ degrees?} \qquad \text{(Cnd. 1)}$$

$$\text{Is average } r_t < 1 \text{ degree per second?} \qquad \text{(Cnd. 2)}$$

Conversely, the method may deem vehicle 18 to not be travelling in a straight path if either condition 3 is satisfied over the time interval (e.g., 2 second), or if all of conditions 4 to 6 are satisfied over the time interval (e.g., 2 seconds).

$$\text{Is 'articulation'} > 10 \text{ degrees?} \qquad \text{(Cnd. 3)}$$

$$\text{Is } |\text{ average } r_v - \text{average } r_t| < 0.5 \text{ degree per second?} \qquad \text{(Cnd. 4)}$$

$$\text{Is average } r_v > 1.5 \text{ degree per second?} \qquad \text{(Cnd. 5)}$$

$$\text{Is average } r_t > 1.5 \text{ degree per second?} \qquad \text{(Cnd. 6)}$$

If vehicle 18 is deemed to be travelling in a straight line, then at step 608 the method may update the future position of tool 16 in accordance a "straight ahead" approach by projecting the position of tool 16, such as in accordance with equation 1. In equation 1, $\Delta t$ is a time interval (e.g., 2 seconds)

$$p_{t,n} = p_{t,n-1} + (v_t * \Delta t) \qquad \text{(Eqn. 1)}$$

At optional step 606, checking whether vehicle 18 is travelling in a 180-degree turnaround may be based on comparing one or more kinematic parameters of vehicle 18 and tool 16 to predetermined thresholds. As a non-limiting example, the method may deem vehicle 18 to be travelling in a turnaround if the change in heading of vehicle 18 ($h_v$) exceeds a predetermined threshold amount (e.g., 90 degrees) within a time interval (e.g., 2 seconds). For example, the method may deem vehicle 18 to be travelling in a turnaround if condition 7 is satisfied within the time interval.

$$\text{Is change in } h_v > 90 \text{ degrees?} \qquad \text{(Cnd. 7)}$$

The determination that vehicle 18 is travelling in a turnaround path may be further based on tracking the location and/or orientation of vehicle 18 and/or tool 16 in relation to a boundary previously worked (e.g., seeded) and unworked (e.g. unseeded) areas of land 24, and the kinematic parameters of vehicle 18 and/or tool 16. For example, if condition 7 is satisfied and vehicle 18 is relatively proximal to the boundary, then step 606 may deem vehicle 18 to be travelling in a turnaround path.

If vehicle 18 is deemed to be travelling in a turnaround path, then at step 608 the method may update the future position of tool 16 in accordance with an "alternative approach."

*Step 610.*

If optional step 606 does not determine that vehicle 18 is travelling in a straight line or in a turnaround (or if optional step 606 is not performed), then the method continues to step 610. Alternatively, if optional step 606 is not performed, then the method proceeds directly from step 604 to step 610.

At step 610, the method updates the modeled position and heading of vehicle 18 and tool 16 from an initial time "n-1" to a future time "n", based on the kinematic parameters of vehicle 18 as determined from the GPS position data received from GPS receiver 400. This updating of the model from the initial time to the future time is described below with reference to examples shown in Figures 7A-7C, 8A-8C, and 9A-9C.

Figures 7A to 7C illustrate updating the model of vehicle 18 in the form of a fixed-axle tractor. It is assumed that the rear wheels of vehicle 18 do not slip, and that all kinematic parameters of vehicle 18 are determined in reference to its center point. Figure 7A shows vehicle 18 in an initial position and heading ($p_{v,n-1}$ , $h_{v,n-1}$). Figure 7B shows vehicle 18' in its updated position but initial heading ($p_{v,n}$, $h_{v,n-1}$). Figure 7C shows vehicle 18" in its updated position and heading ($p_{v,n}$, $h_{v,n}$), which may be determined in accordance with equations 2 to 3. (As used herein, the asterisk symbol "*" denotes the multiplication operation.)

$$p_{v,n} = p_{v,n-1} + (v_v * t) \qquad \text{(Eqn. 2)}$$

$$h_{v,n} = h_{v,n-1} + (r_v * t) \qquad \text{(Eqn. 3)}$$

where:

$v_v$ and $r_v$ are calculated based on the positional data from GPS receiver 400; and
t is the time interval from initial time "n-1" to future time "n".

Figures 8A to 8C illustrate updating of the model of vehicle 18 having an articulated front section 18a with a wheel axle, and a rear section 18b having a wheel axle. For example, front section 18a may be a tractor as shown in Figure 4A, while rear section 18b may be an air seeder cart between the tractor and the tool 16. It is assumed that the wheel axle of the front section 18a dictates turns, and that the wheel axle of the rear section 18b will follow in its path. All velocities ($v_v$) and turn rates ($r_v$) are in reference to the center point of front section 18a. Positions and headings of front section 18a and rear section 18b are differentiated by subscripts "vf" and "vr" respectively. Figure 8A shows front section 18a in its initial position and heading ($p_{vf,n-1}$, $h_{vf,n-1}$), and rear section 18b in its initial position and heading ($p_{vr,n-1}$, $h_{vr,n-1}$). Figure 8B shows vehicle front section 18a' in its updated position and heading ($p_{vf,n}$, $h_{vf,n}$). These values may be determined in accordance with equations 4 to 5. It will be appreciated that in equation 4 the product ($v_v * t * r_v * t$) is equal to the product of the parameters 'Arc Distance' and 'Arc Angle' shown in Figure 8A, with the parameter 'Arc Angle' being approximately equal to tangent ('Arc Angle'), for small values of 'Arc Angle'.

$$p_{vf,n} = p_{vf,n-1} + (v_v * t * r_v * t) \qquad \text{(Eqn. 4)}$$

$$h_{vf,n} = h_{vf,n-1} + (r_v * t) \qquad \text{(Eqn. 5)}$$

where:

$v_v$ and $r_v$ are calculated based on the positional data from GPS receiver 400; and
t is the time interval from initial time "n-1" to future time "n".

Figure 8C shows rear section 18b' in its updated position and heading ($p_{vr,n}$, $h_{vr,n}$). The value of $p_{vr,n}$ is constrained by the requirement of geometric continuity between front section 18a and rear section 18b at their connection point, and is therefore determinable from the known geometry of section 18b and the value of $h_{vr,n}$. The value of $h_{vr,n}$, may be determined in accordance with equation 6.

$$h_{vr,n} = h_{vr,n-1} + a_n \qquad \text{(Eqn. 6)}$$

In equation 6, parameter ($a_n$) denotes the difference in heading between the front section 18a and rear section 18b (i.e., 'articulation'), as determined by equation 7.

$$a_n = \alpha * \text{'Steady State Articulation'} + (1 - \alpha) * a_{n-1} \qquad \text{(Eqn. 7)}$$

where:

$\alpha$ is a weighting factor , selected with a value $0 <= \alpha <= 1.0$; and
$a_{n-1}$ is the initial articulation.

The value of $\alpha$ may be set to 0.5 as an example. The parameter 'Steady State Articulation' is determined in accordance with either equation 8 or equation 9, depending on the noted conditions.

If ($v_v$ < 0.2 m/s) or ($r_v$ < 0.5 degrees/second), then:

$$\text{'Steady State Articulation'} = 0 \qquad \text{(Eqn. 8)}$$

Else:

$$\text{'Steady State Articulation'} = D * r_v \div v_v \qquad \text{(Eqn. 9)}$$

where:
D is the distance between the wheel axle of front section 18a and rear section 18b; and
where 'Steady State Articulation' is subject to condition 8:

$$\text{'Steady State Articulation'} <= (2 * r_v * t) \qquad \text{(Cnd. 8)}$$

Equation 8 is used when vehicle velocity ($v_{v,n}$) is below 0.2 m/s or vehicle turn rate (r) is below 0.5 degrees per second. Otherwise, equation 9 is used, subject to limiting 'Steady State Articulation' to a maximum value. Collectively, these conditions avoid erratic changes in the heading of the rear section 18b, and hence the hitch point to the tool 16, due to small changes in GPS position data received from GPS receiver 400, as may be encountered when the vehicle 18 moves over rough terrain.

Figures 9A to 9C illustrate updating of the model of tool 16. It is assumed that rear wheels of tool 16 do not slip, and that and that all kinematic parameters of tool 16 are determined in reference to its center point. Figure 9A shows tool 16 in an initial position and heading ($p_{t,n-1}$, $h_{t,n-1}$). Figure 9B shows tool 16' in its updated position but initial heading ($p_{t,n}$, $h_{t,n-1}$). Figure 9C shows tool 16" in its updated position and heading ($p_{t,n}$, $h_{t,n,}$).

The updating of the model of tool 16 can be conceptualized as two sub-steps. The first sub-step, shown in Figure 9B, is to translate the tool 16 from its initial heading ($h_{n-1}$) by a distance equal to the "pull" distance of the vehicle hitch 22, as projected on an axis parallel to the initial heading of the tool ($h_{t,n-1}$). This "pull" distance is determined by the distance between hitch 22 in its initial position, and hitch 22" in its updated position (see Figures 7C or 8C). (The initial position of hitch 22 may be determined from the known geometry of vehicle 18 and its attached hitch 22, and the initial position and heading ($p_{v,n-1}$, $h_{v,n-1}$). The updated position of hitch 22 may be determined from the known geometry of vehicle 18 and attached hitch 22, after determining the updated position and heading ($p_{v,n}$, $h_{v,n}$) of vehicle 18, as previously described above with reference to Figures 7A to 7C, or Figures 8A to 8C.)

The second sub-step, as shown in Figure 9C, is to rotate the tool 16 about its rotation point to ensure geometric continuity between the tool 16 and the vehicle hitch 22" in its fully propagated position. Accordingly, the updated position and heading of tool 16, may be determined in accordance with equations 10 to 14.

$$p_{t,n} = p_{t,n-1} + \text{'Hitch Pull Projection'} \qquad \text{(Eqn. 10)}$$

$$h_{t,n} = h_{t,n-1} + \text{'Hitch Pull Theta } \theta\text{'} \qquad \text{(Eqn. 11)}$$

where:

'Hitch Pull Projection' = parallel projection of 'Hitch Pull Vector' on initial tool heading vector; (Eqn. 12)

'Hitch Pull Rejection' = perpendicular rejection of 'Hitch Pull Vector' on initial tool heading vector; (Eqn. 13)

'Hitch Pull Theta θ'

= arctangent {'Hitch Pull Rejection' ÷ ('Hitch Pull Rejection' + d)};

(Eqn. 13a)

'd' is the distance between the initial position of vehicle hitch 22 and the rotation point of tool 16 along an axis parallel to the initial heading of the tool ($h_{t,n-1}$) (see Fig. 9C);
(Eqn. 13b)

'Hitch Pull Vector' = updated hitch position - initial hitch position.    (Eqn. 14)

It is acknowledged that the above approach to updating the model of tool 16 may initially result in an updated position and heading ($p_{t,n}$, $h_{t,n}$) that is inconsistent with the requirement of geometric continuity with the updated hitch position. However, such error may be reduced to an acceptable degree by iteration of equations 10 to 14.

*Step 612.*

Step 612 is optional. At step 612, the method corrects the updated model of vehicle 18 and tool 16, based on the determined kinematic parameters of tool 16. Correction of the updated model is described below with reference to the illustrative example shown in Figures 10A to 10C. Figure 10A shows the vehicle 18 and tool 16 in their uncorrected updated positions and headings ($p_{v,n}$, $h_{v,n}$) and ($p_{t,n}$, $h_{t,n}$), as determined in step 610. These positions are labelled as "uncorrected, updated position and heading" in the legend of Figures 10A to 10C. The correction may be conceptualized as two sub-steps.

The first sub-step, as shown in Figure 10B, is to correct the updated position and heading ($p_{t,n}$, $h_{t,n}$) of tool 16, by applying a weighting factor to the position and heading (pt, ht) of tool 16, as determined in step 604 from position data received from GPS receiver 402 attached to tool 16. The position and heading (pt, ht) are labelled as "position and heading of tool based on GPS receiver 402 attached to tool" in the legend of Figures 10A to 10C. The corrected heading ($h_{t,n,corr}$) is applied by rotating the model of tool 16 about its rear wheel axis. The corrected, updated position and heading ($p_{t,n,corr}$, $h_{t,n,corr}$) of tool 16 may be determined in accordance with equations 15 and 16. In equations 15 and 16, the value of β may be again be set to 0.25, as an example. Figure 10B shows the tool 16' and vehicle 18' in their corrected, updated positions and headings.

$$p_{t,n,corr} = \beta * p_t + (1 - \beta) * (p_{t,n})$$    (Eqn. 15)

$$h_{t,n,corr} = \beta * h_t + (1 - \beta) * (h_{t,n})$$    (Eqn. 16)

where:

pt and ht are determined or calculated based on the positional data from GPS receiver 402; and
β is a weighting factor with a value $0 < \beta <= 1.0$

The second sub-step, as shown in Figure 10C, is to further correct the position and heading of vehicle 18'. Again, this is performed by applying a weighting factor to the position and heading ($p_v$, $h_v$) of vehicle 18', as determined in step 604 from position data received from GPS receiver 400 attached to vehicle 18. The position and heading ($p_v$, $h_v$) are labelled as "position and heading of vehicle based on GPS receiver 400 attached to vehicle" in the legend of Figures 10A to 10C. The further corrected heading ($h_{v,n,corr}$) is applied by rotating the model of vehicle 18 about its hitch point 22. The corrected, updated position and heading ($p_{v,n,corr}$, $h_{v,n,corr}$) of vehicle 18 may be determined in accordance with equations 17 and 18. In equations 17 and 18, the value of β may set to 0.25, as an example, but may be different from the value used in equations 15 and 16. Figure 10C shows vehicle 18" in its further corrected position and heading.

$$p_{v,n,corr} = \beta * p_v + (1 - \beta) * (p_{v,n})$$    (Eqn. 17)

$$h_{v,n,corr} = \beta * h_v + (1 - \beta) * (h_{v,n})$$    (Eqn. 18)

where:

$p_v$ and $h_v$ are determined or calculated based on the positional data from GPS receiver 400; and
$\beta$ is a weighting factor with a value $0 < \beta <= 1.0$

It will be appreciated that if $\beta = 0$ or if $\beta$ is very close to zero in equations 15 to 18, then step 612 will be or will effectively be excluded from embodiments of method 600.

*Step 614.*

At step 614, the method outputs the predicted tool position to the tool control module 512. The predicted tool position is based on either the updated model as determined in step 610 (and optionally corrected in step 612), or the updated model as determined in step 608, depending on which branch of the method was performed. The tool control module 512 can then use the predicted tool position to generate a control signal to control a tool actuator 32, as described above. The control module 512 may also use the predicted tool heading to generate the control signal. The method then returns to step 602, and repeats using the updated model (as determined in step 610 (and optionally corrected in step 612), or in step 608) in the next iteration of the method at the next time instance.
As a non-limiting example, tool control module 512 may track worked and unworked areas of land (e.g., by cumulatively recording the position of tool 16 based on positional data from GPS receiver 402), and compare the predicted future location of the tool 16 to such worked and unworked areas. If the predicted future location of the tool 16 will overlap the worked area, then tool control module 512 may generate a control signal for the tool actuator 32 to actuate the tool 16 or its implement 30 (e.g., implements 30a to 30c shown in Figure 4B). The control may be selected with a view to avoiding the overlapping or skipping of previously worked areas. For example, the tool actuator 32 may vary the position of a valve in a supply line to control flow of seed and/or fertilizer to a particulate material dispensing implement 30, or selectively lower or raise a ground opening implement 30 relative to the land 24 as the implement 30 is predicted to approach a boundary between worked and unworked areas. As examples, the tool control module 512 may be adapted to interface with a control unit as described in Applicant's International application publication WO 2012/115563 A1. Accordingly, the system of the present invention may be part of, or used for an agricultural sectional control technology (SCT).
In addition or the alternative, tool control module 512 may generate control signals for tool actuators 32 to compensate for a speed differential between laterally spaced apart implements 30 (e.g., implements 30a to 30c show in Figure 4B). The present position of tool 16 can be determined based on GPS data from second GPS receiver 402. As described above, method 600 predicts the position of tool 16 at a future time of known time interval from the present time. Method 600 may be adapted to predict the position and heading of tool 16 at multiple times in the future, either within or between each iteration of method 600. This results in multiple predictions of position and heading of tool 16 at different times. Based on the known geometry of implements 30a to 30c relative to tool bar 17, multiple predictions of the individual positions and heading of implements 30a to 30c may be determined. The time-derivative of these multiple predictions of positions and headings of implements 30a to 30c, may be used to predict the individual speed and turn rate of implements 30a to 30c, which may in turn be used to predict the individual velocity of implements 30a to 30c, using geometric and kinematic relationships. Based on the predicted velocity of implements 30a to 30c, tool control module 512 may generate control signals individualized for each of control tool actuators 32a to 32c. For example, with reference to Figure 4B, suppose the predicted path of tool 16 is a clockwise curve in the drawing plane. Method 600 will predict that implement 30c will travel at a faster speed than implement 30a along the curved path. Thus, tool control module 512 may generate a control signal for tool actfthenuator 32c to vary the position of a valve in a supply line to increase the flow rate of seed and/or fertilizer to implement 30c, while generating a different control signal for tool actuator 32a to vary the position of another valve in a supply line to decrease the flow rate of seed and/or fertilizer to implement 30a. This may be effected so that implements 30a and 30c deposit substantially constant and uniform amounts of seed and/or fertilizer per unit length of land 24, despite tool 16 moving along a curved path. By virtue of being based upon a predicted velocity, as opposed to instantaneous velocity, control of the tool actuators 32 may be "queued" in advance of the tool 16 reaching the predicted velocity.

*Additional steps to evaluate model validity.*

Method 600 may include further steps (not shown) to evaluate the validity of the model of vehicle 18 and tool 16. This validation may involve determining a difference between modeled, predicted kinematic parameters of position (p) and heading (h) of vehicle 18 and tool 16, with subsequently determined actual measurements of these kinematic parameters based on the GPS positional data from GPS receivers 400, 402. If a difference between these values exceeds a predetermined threshold value, then the system of the present invention may take an action. For example, the action may include causing display device 506 to display an alarm warning that the model is invalid. The action may include modifying parameters of the model, such as the weighting factor, $\beta$, in equations 15 to 18.

*Example.*

Figure 11A and 11B show plan views of a computer-run seeding simulation using section control technology (SCT) that implements a "straight ahead" approach (Figure 11A) and the method of the present invention (Figure 11B) to predict the future position of the seeding tool. The light shaded area represents previously seeded area (110). The medium shaded area represents the seeding path (112). The dark shaded areas (114) represent portions of the seeding path that were skipped by a seeding tool. Figures 11A and 11B indicates that implementation method of the present invention results in less skipped areas of the seeding path, when compared to implementation of the "straight ahead" approach.

*Interpretation.*

Aspects of the present invention may be described with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

The flowchart and block diagrams in the Figures illustrate the architecture, functionality, and operation of possible implementations of systems, methods and computer program products according to various embodiments of the present invention. **In** this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The corresponding structures, materials, acts, and equivalents of all means or steps plus function elements in the claims appended to this specification are intended to include any structure, material, or act for performing the function in combination with other claimed elements as specifically claimed.

References in the specification to "one embodiment", "an embodiment", etc., indicate that the embodiment described may include a particular aspect, feature, structure, or characteristic, but not every embodiment necessarily includes that aspect, feature, structure, or characteristic. Moreover, such phrases may, but do not necessarily, refer to the same embodiment referred to in other portions of the specification. Further, when a particular aspect, feature, structure, or characteristic is described in connection with an embodiment, it is within the knowledge of one skilled in the art to affect or connect such module, aspect, feature, structure, or characteristic with other embodiments, whether or not explicitly described. In other words, any module, element or feature may be combined with any other element or feature in different embodiments, unless there is an obvious or inherent incompatibility, or it is specifically excluded.

It is further noted that the claims may be drafted to exclude any optional element. As such, this statement is intended to serve as antecedent basis for the use of exclusive terminology, such as "solely," "only," and the like, in connection with the recitation of claim elements or use of a "negative" limitation. The terms "preferably," "preferred," "prefer," "optionally," "may," and similar terms are used to indicate that an item, condition or step being referred to is an optional (not required) feature of the invention.

The singular forms "a," "an," and "the" include the plural reference unless the context clearly dictates otherwise. The term "and/or" means any one of the items, any combination of the items, or all of the items with which this term is associated. The phrase "one or more" is readily understood by one of skill in the art, particularly when read in context of its usage.

The term "about" can refer to a variation of $\pm$ 5%, $\pm$ 10%, $\pm$ 20%, or $\pm$ 25% of the value specified. For example, "about 50" percent can in some embodiments carry a variation from 45 to 55 percent. For integer ranges, the term "about" can include one or two integers greater than and/or less than a recited integer at each end of the range. Unless indicated otherwise herein, the term "about" is intended to include values and ranges proximate to the recited range that are equivalent in terms of the functionality of the composition, or the embodiment.

As will be understood by one skilled in the art, for any and all purposes, particularly in terms of providing a written description, all ranges recited herein also encompass any and all possible sub-ranges and combinations of sub-ranges thereof, as well as the individual values making up the range, particularly integer values. A recited range includes each specific value, integer, decimal, or identity within the range. Any listed range can be easily recognized as sufficiently describing and enabling the same range being broken down into at least equal halves, thirds, quarters, fifths, or tenths. As a non-limiting example, each range discussed herein can be readily broken down into a lower third, middle third and upper third, etc.

As will also be understood by one skilled in the art, all language such as "up to", "at least", "greater than", "less than", "more than", "or more", and the like, include the number recited and such terms refer to ranges that can be subsequently broken down into sub-ranges as discussed above. In the same manner, all ratios recited herein also include all sub-ratios falling within the broader ratio.

## Claims

1. A computer-implemented method for controlling an agricultural tool (16) towed by a pivotally attached vehicle (18), the method comprising the steps of:

   (a) storing in a memory a model comprising:

   (i) a modeled vehicle position and heading $p_{v,n-1}$, $h_{v,n-1}$ at an initial time; and
   (ii) a modeled tool position and heading $p_{t,n-1}$, $h_{t,n-1}$ at the initial time;

   (b) at or after the initial time, receiving positional data from a first GPS receiver (400) attached to the vehicle so as to move in unison with the vehicle; and
   (c) generating a control signal for controlling an actuator (32a-32c) associated with the tool,

   **characterized in that** the computer-implemented method further comprises:

   (d) calculating a vehicle velocity $v_v$, wherein velocity is a rate of change of position per unit time, and a vehicle rate of change in heading per unit time $r_v$ based on the positional data received from the first GPS receiver;
   (e) updating the model by calculating:

   (i) a modeled vehicle position and heading $p_{v,n}$, $h_{v,n}$ at a future time, wherein $p_{v,n}$ is based on $p_{v,n-1}$ and $v_v$, and wherein $h_{v,n}$ is based on $h_{v,n-1}$ and $r_v$;
   (ii) a modeled tool position $p_{t,n}$ at the future time, wherein $p_{t,n}$ is based on $p_{t,n-1}$, $h_{t,n-1}$ and $p_{v,n}$, $h_{v,n}$; and

   wherein in step (c) the control signal is based on $p_{t,n}$.

2. The method of claim 1, wherein in step (e), updating the model further includes calculating a modeled tool heading $h_{t,n}$ at the future time, wherein $h_{t,n}$ is based on $h_{t,n-1}$ and $p_{v,n}$, $h_{v,n}$ and in step (c), the control signal is further based on $h_{t,n}$.

3. The method of claim 2, wherein the method further comprises, at or after the initial time, receiving positional data from a second GPS receiver attached to the tool (16) so as to move in unison with the tool, and in step (e)(ii), $p_{t,n}$ is further based on a tool position $p_t$ determined from the positional data received from the second GPS receiver, and $h_{t,n}$ is further based on a tool heading ht determined from the positional data received from the second GPS receiver.

4. The method of any one of claims 1 to 3, wherein in step (e)(i), $p_{v,n}$ is further based on a vehicle position $p_v$ determined from the positional data received from the first GPS receiver (400), and $h_{v,n}$ is further based on a vehicle heading $h_v$ determined from the positional data received from the first GPS receiver.

5. A system for controlling an agricultural tool (16) towed by a pivotally attached vehicle (18), the system comprising:

   a first GPS receiver (400) attached to the vehicle so as to move in unison with the vehicle;
   a processor (500) operatively connected to the first GPS receiver to receive positional data therefrom; and
   a tangible, non-transitory computer readable medium storing instructions readable by the processor to implement a method comprising the steps of:

   (a) storing in a memory a model comprising:

(i) a modeled vehicle position and heading $p_{v,n-1}$, $h_{v,n-1}$ at an initial time; and

(ii) a modeled tool position and heading $p_{t,n-1}$, $h_{t,n-1}$ at the initial time;

(b) at or after the initial time, receiving positional data from the first GPS receiver; and

(c) generating a control signal for controlling an actuator (32a-32c) associated with the tool,

**characterized in that** the method further comprises:

(d) calculating a vehicle velocity $v_v$, wherein velocity is a rate of change of position per unit time, and a vehicle rate of change in heading per unit time $r_v$ based on the positional data received from the first GPS receiver;

(e) updating the model by calculating:

(i) a modeled vehicle position and heading $p_{v,n}$, $h_{v,n}$ at a future time, wherein $p_{v,n}$ is based on $p_{v,n-1}$ and $v_v$, and $h_{v,n}$ is based on $h_{v,n-1}$ and $r_v$;

(ii) a modeled tool position $p_{t,n}$ at the future time, wherein $p_{t,n}$ is based on $p_{t,n-1}$, $h_{t,n-1}$ and $p_{v,n}$, $h_{v,n}$; and

wherein in step (c) the control signal is based on $p_{t,n}$.

6. The system of claim 5, wherein in step (e), updating the model further includes calculating a modeled tool heading $h_{t,n}$ at the future time, wherein $h_{t,n}$ is based on $h_{t,n-1}$ and $p_{v,n}$, $h_{v,n}$ and in step (c), the control signal is further based on $h_{t,n}$.

7. The system of claim 6, wherein:

the system further comprises a second GPS receiver (402) attached to the tool (16) so as to move in unison with the tool, wherein the processor (500) is operatively connected to the second GPS receiver to receive positional data therefrom; and

the method further comprises, at or after the initial time, receiving positional data from the second GPS receiver, and in step (e)(ii), $p_{t,n}$ is further based on a tool position pt determined from the positional data received from the second GPS receiver, and $h_{t,n}$ is further based on a tool heading ht determined from the positional data received from the second GPS receiver.

8. The system of any one of claims 5 to 7, wherein in step (e)(i), $p_{v,n}$ is further based on a vehicle position $p_v$ determined from the positional data received from the first GPS receiver (400), and $h_{v,n}$ is further based on a vehicle heading $h_v$ determined from the positional data received from the first GPS receiver.

9. A computer program product for controlling an agricultural tool (16) towed by a pivotally attached vehicle (18), the computer program product comprising a tangible, non-transitory computer readable medium storing instructions readable by a processor (500) operatively connected to a first GPS receiver (400) attached to the vehicle so as to move in unison with the vehicle, to implement a method comprising the steps of:

(a) storing in a memory a model comprising:

(i) a modeled vehicle position and heading $p_{v,n-1}$, $h_{v,n-1}$ at an initial time; and

(ii) a modeled tool position and heading $p_{t,n-1}$, $h_{t,n-1}$ at the initial time;

(b) at or after the initial time, receiving positional data from the first GPS receiver; and

(c) generating a control signal for controlling an actuator (32a-32c) associated with the tool,

**characterized in that** the method further comprises:

(d) calculating a vehicle velocity $v_v$, wherein velocity is a rate of change of position per unit time, and a vehicle rate of change in heading per unit time $r_v$ based on the positional data received from the first GPS receiver;

(e) updating the model by calculating:

(i) a modeled vehicle position and heading $p_{v,n}$, $h_{v,n}$ at a future time, wherein $p_{v,n}$ is based on $p_{v,n-1}$ and $v_v$, and $h_{v,n}$ is based on $h_{v,n-1}$ and $r_v$;

(ii) a modeled tool position $p_{t,n}$ at the future time, wherein $p_{t,n}$ is based on $p_{t,n-1}$, $h_{t,n-1}$ and $p_{v,n}$, $h_{v,n}$; and

wherein in step (c) the control signal is based on $p_{t,n}$.

10. The computer program product of claim 9, wherein in step (e), updating the model further includes calculating a modeled tool heading $h_{t,n}$ at the future time, wherein $h_{t,n}$ is based on $h_{t,n-1}$ and $p_{v,n}$, $h_{v,n}$ and in step (c), the control signal is further based on $h_{t,n}$.

11. The computer program product of claim 10, wherein the processor (500) is operatively connected to a second GPS receiver (402) attached to the tool (16) so as to move in unison with the tool, and the method further comprises, at or after the initial time, receiving positional data from the second GPS receiver, and in step (e)(ii), $p_{t,n}$ is further based on a tool position $p_t$ determined from the positional data received from the second GPS receiver, and $h_{t,n}$ is further based on a tool heading ht determined from the positional data received from the second GPS receiver.

12. The computer program product of any one of claims 9 to 11, wherein in step (e)(i), $p_{v,n}$ is further based on a vehicle position $p_v$ determined from the positional data received from the first GPS receiver (400), and $h_{v,n}$ is further based on a vehicle heading $h_v$ determined from the positional data received from the first GPS receiver.

## Patentansprüche

1. Computerimplementiertes Verfahren zur Steuerung eines von einem schwenkbar befestigten Fahrzeug (18) gezogenen landwirtschaftlichen Werkzeugs (16), wobei das Verfahren folgende Schritte umfasst:

(a) Speichern - in einem Speicher - eines Modells, umfassend:

(i) eine modellierte Fahrzeugposition und -richtung $p_{v,n-1}$, $h_{v,n-1}$ zu einer Anfangszeit; und
(ii) eine modellierte Werkzeugposition und -richtung $p_{t,n-1}$, $h_{t,n-1}$ zu der Anfangszeit;

(b) zu oder nach der Anfangszeit, Empfangen von Positionsdaten von einem ersten GPS-Empfänger (400), der an dem Fahrzeug befestigt ist, um sich gemeinsam mit dem Fahrzeug zu bewegen; und
(c) Erzeugen eines Steuersignals zum Steuern eines Aktuators (32a-32c), der dem Werkzeug zugeordnet ist,

**dadurch gekennzeichnet, dass** das computerimplementierte Verfahren ferner Folgendes umfasst:

(d) Berechnen einer Fahrzeuggeschwindigkeit $v_v$, wobei Geschwindigkeit eine Positionsänderungsrate pro Zeiteinheit bedeutet, und einer Fahrzeugrichtungsänderungsrate pro Zeiteinheit $r_v$ basierend auf den Positionsdaten, die von dem ersten GPS-Empfänger empfangen wurden;
(e) Aktualisieren des Modells durch Berechnen von Folgendem:

(i) einer modellierten Fahrzeugposition und -richtung $p_{v,n}$, $h_{v,n}$ zu einer zukünftigen Zeit, wobei $p_{v,n}$ auf $p_{v,n-1}$ und $v_v$ basiert und wobei $h_{v,n}$ auf $h_{v,n-1}$ und $r_v$ basiert;
(ii) einer modellierten Werkzeugposition $p_{t,n}$ zu der zukünftigen Zeit, wobei $p_{t,n}$ auf $p_{t,n-1}$, $h_{t,n-1}$ und $p_{v,n}$, $h_{v,n}$ basiert; und

wobei in Schritt (c) das Steuersignal auf $p_{t,n}$ basiert.

2. Verfahren nach Anspruch 1, wobei in Schritt (e) das Aktualisieren des Modells ferner das Berechnen einer modellierten Werkzeugrichtung $h_{t,n}$ zu der zukünftigen Zeit umfasst, wobei $h_{t,n}$ auf $h_{t,n-1}$ und $p_{v,n}$, $h_{v,n}$ basiert und in Schritt (c) das Steuersignal ferner auf $h_{t,n}$ basiert.

3. Verfahren nach Anspruch 2, wobei das Verfahren ferner - zu oder nach der Anfangszeit - das Empfangen von Positionsdaten von einem zweiten GPS-Empfänger umfasst, der an dem Werkzeug (16) befestigt ist, um sich gemeinsam mit dem Werkzeug zu bewegen, und in Schritt (e) (ii) $p_{t,n}$ ferner auf einer Werkzeugposition $p_t$ basiert, die anhand der Positionsdaten, die von dem zweiten GPS-Empfänger empfangen wurden, bestimmt wird, und $h_{t,n}$ ferner auf einer Werkzeugrichtung $h_t$ basiert, die anhand der Positionsdaten, die von dem zweiten GPS-Empfänger empfangen wurden, bestimmt wird.

4. Verfahren nach einem der Ansprüche 1 bis 3, wobei in Schritt (e) (i) $p_{v,n}$ ferner auf einer Fahrzeugposition $p_v$ basiert, die anhand der Positionsdaten, die von dem ersten GPS-Empfänger (400) empfangen wurden, bestimmt wird, und

$h_{v,n}$ ferner auf einer Fahrzeugrichtung $h_v$ basiert, die anhand der Positionsdaten, die von dem ersten GPS-Empfänger empfangen wurden, bestimmt wird.

5. System zur Steuerung eines von einem schwenkbar befestigten Fahrzeug (18) gezogenen landwirtschaftlichen Werkzeugs (16), wobei das System Folgendes umfasst:

   einen ersten GPS-Empfänger (400), der an dem Fahrzeug befestigt ist, um sich gemeinsam mit dem Fahrzeug zu bewegen;
   einen Prozessor (500), der mit dem ersten GPS-Empfänger wirkverbunden ist, um Positionsdaten von diesem zu empfangen; und
   ein gegenständliches, nichtflüchtiges computerlesbares Medium, das Anweisungen speichert, die durch den Prozessor lesbar sind, um ein Verfahren zu implementieren, das folgende Schritte umfasst:

   (a) Speichern - in einem Speicher - eines Modells, umfassend:

   (i) eine modellierte Fahrzeugposition und -richtung $p_{v,n-1}$, $h_{v,n-1}$ zu einer Anfangszeit; und
   (ii) eine modellierte Werkzeugposition und -richtung $p_{t,n-1}$, $h_{t,n-1}$ zu der Anfangszeit;

   (b) zu oder nach der Anfangszeit, Empfangen von Positionsdaten von dem ersten GPS-Empfänger; und
   (c) Erzeugen eines Steuersignals zum Steuern eines Aktuators (32a-32c), der dem Werkzeug zugeordnet ist,

   **dadurch gekennzeichnet, dass** das Verfahren ferner Folgendes umfasst:

   (d) Berechnen einer Fahrzeuggeschwindigkeit $v_v$, wobei Geschwindigkeit eine Positionsänderungsrate pro Zeiteinheit bedeutet, und einer Fahrzeugrichtungsänderungsrate pro Zeiteinheit $r_v$ basierend auf den Positionsdaten, die von dem ersten GPS-Empfänger empfangen wurden;
   (e) Aktualisieren des Modells durch Berechnen von Folgendem:

   (i) einer modellierten Fahrzeugposition und -richtung $p_{v,n}$, $h_{v,n}$ zu einer zukünftigen Zeit, wobei $p_{v,n}$ auf $p_{v,n-1}$ und $v_v$ basiert und $h_{v,n}$ auf $h_{v,n-1}$ und $r_v$ basiert;
   (ii) einer modellierten Werkzeugposition $p_{t,n}$ zu der zukünftigen Zeit, wobei $p_{t,n}$ auf $p_{t,n-1}$, $h_{t,n-1}$ und $p_{v,n}$, $h_{v,n}$ basiert; und

   wobei in Schritt (c) das Steuersignal auf $p_{t,n}$ basiert.

6. System nach Anspruch 5, wobei in Schritt (e) das Aktualisieren des Modells ferner das Berechnen einer modellierten Werkzeugrichtung $h_{t,n}$ zu der zukünftigen Zeit umfasst, wobei $h_{t,n}$ auf $h_{t,n-1}$ und $p_{v,n}$, $h_{v,n}$ basiert und in Schritt (c) das Steuersignal ferner auf $h_{t,n}$ basiert.

7. System nach Anspruch 6, wobei:

   das System ferner einen zweiten GPS-Empfänger (402) umfasst, der an dem Werkzeug (16) befestigt ist, um sich gemeinsam mit dem Werkzeug zu bewegen, wobei der Prozessor (500) mit dem zweiten GPS-Empfänger wirkverbunden ist, um Positionsdaten von diesem zu empfangen; und
   das Verfahren ferner - zu oder nach der Anfangszeit - das Empfangen von Positionsdaten von dem zweiten GPS-Empfänger umfasst und in Schritt (e) (ii) $p_{t,n}$ ferner auf einer Werkzeugposition $p_t$ basiert, die anhand der Positionsdaten, die von dem zweiten GPS-Empfänger empfangen wurden, bestimmt wird, und $h_{t,n}$ ferner auf einer Werkzeugrichtung $h_t$ basiert, die anhand der Positionsdaten, die von dem zweiten GPS-Empfänger empfangen wurden, bestimmt wird.

8. System nach einem der Ansprüche 5 bis 7, wobei in Schritt (e) (i) $p_{v,n}$ ferner auf einer Fahrzeugposition $p_v$ basiert, die anhand der Positionsdaten, die von dem ersten GPS-Empfänger (400) empfangen wurden, bestimmt wird, und $h_{v,n}$ ferner auf einer Fahrzeugrichtung $h_v$ basiert, die anhand der Positionsdaten, die von dem ersten GPS-Empfänger empfangen wurden, bestimmt wird.

9. Computerprogrammprodukt zur Steuerung eines von einem schwenkbar befestigten Fahrzeug (18) gezogenen landwirtschaftlichen Werkzeugs (16), wobei das Computerprogrammprodukt ein gegenständliches, nichtflüchtiges computerlesbares Medium umfasst, das Anweisungen speichert, die durch einen Prozessor (500), der mit einem ersten GPS-Empfänger (400) wirkverbunden ist, der an dem Fahrzeug befestigt ist, um sich gemeinsam mit dem Fahrzeug zu bewegen, lesbar sind, um ein Verfahren zu implementieren, das folgende Schritte umfasst:

(a) Speichern - in einem Speicher - eines Modells, umfassend:

(i) eine modellierte Fahrzeugposition und -richtung $p_{v,n-1}$, $h_{v,n-1}$ zu einer Anfangszeit; und
(ii) eine modellierte Werkzeugposition und -richtung $p_{t,n-1}$, $h_{t,n-1}$ zu der Anfangszeit;

(b) zu oder nach der Anfangszeit, Empfangen von Positionsdaten von dem ersten GPS-Empfänger; und
(c) Erzeugen eines Steuersignals zum Steuern eines Aktuators (32a-32c), der dem Werkzeug zugeordnet ist,

**dadurch gekennzeichnet, dass** das Verfahren ferner Folgendes umfasst:

(d) Berechnen einer Fahrzeuggeschwindigkeit $v_v$, wobei Geschwindigkeit eine Positionsänderungsrate pro Zeiteinheit bedeutet, und einer Fahrzeugrichtungsänderungsrate pro Zeiteinheit $r_v$ basierend auf den Positionsdaten, die von dem ersten GPS-Empfänger empfangen wurden;
(e) Aktualisieren des Modells durch Berechnen von Folgendem:

(i) einer modellierten Fahrzeugposition und -richtung $p_{v,n}$, $h_{v,n}$ zu einer zukünftigen Zeit, wobei $p_{v,n}$ auf $p_{v,n-1}$ und $v_v$ basiert und $h_{v,n}$ auf $h_{v,n-1}$ und $r_v$ basiert;
(ii) einer modellierten Werkzeugposition $p_{t,n}$ zu der zukünftigen Zeit, wobei $p_{t,n}$ auf $p_{t,n-1}$, $h_{t,n-1}$ und $p_{v,n}$, $h_{v,n}$ basiert; und

wobei in Schritt (c) das Steuersignal auf $p_{t,n}$ basiert.

10. Computerprogrammprodukt nach Anspruch 9, wobei in Schritt (e) das Aktualisieren des Modells ferner das Berechnen einer modellierten Werkzeugrichtung $h_{t,n}$ zu der zukünftigen Zeit umfasst, wobei $h_{t,n}$ auf $h_{t,n-1}$ und $p_{v,n}$, $h_{v,n}$ basiert und in Schritt (c) das Steuersignal ferner auf $h_{t,n}$ basiert.

11. Computerprogrammprodukt nach Anspruch 10, wobei der Prozessor (500) mit einem zweiten GPS-Empfänger (402) wirkverbunden ist, der an dem Werkzeug (16) befestigt ist, um sich gemeinsam mit dem Werkzeug zu bewegen, und das Verfahren ferner - zu oder nach der Anfangszeit - das Empfangen von Positionsdaten von dem zweiten GPS-Empfänger umfasst und in Schritt (e) (ii) $p_{t,n}$ ferner auf einer Werkzeugposition $p_t$ basiert, die anhand der Positionsdaten, die von dem zweiten GPS-Empfänger empfangen wurden, bestimmt wird, und $h_{t,n}$ ferner auf einer Werkzeugrichtung $h_t$ basiert, die anhand der Positionsdaten, die von dem zweiten GPS-Empfänger empfangen wurden, bestimmt wird.

12. Computerprogrammprodukt nach einem der Ansprüche 9 bis 11, wobei in Schritt (e) (i) $p_{v,n}$ ferner auf einer Fahrzeugposition $p_v$ basiert, die anhand der Positionsdaten, die von dem ersten GPS-Empfänger (400) empfangen wurden, bestimmt wird, und $h_{v,n}$ ferner auf einer Fahrzeugrichtung $h_v$ basiert, die anhand der Positionsdaten, die von dem ersten GPS-Empfänger empfangen wurden, bestimmt wird.

**Revendications**

1. Procédé mis en œuvre par ordinateur pour commander un outil agricole (16) remorqué par un véhicule fixé de façon pivotante (18), le procédé comprenant les étapes suivantes :

(a) le stockage, dans une mémoire, d'un modèle comprenant :

(i) une position et un cap de véhicule modélisés $p_{v,n-1}$, $h_{v,n-1}$ à un temps initial ; et
(ii) une position et un cap d'outil modélisés $p_{t,n-1}$, $h_{t,n-1}$ au temps initial ;

(b) au temps initial ou après celui-ci, la réception de données positionnelles en provenance d'un premier récepteur GPS (400) fixé au véhicule afin de se mouvoir en tandem avec le véhicule ; et
(c) la génération d'un signal de commande pour commander un actionneur (32a-32c) associé à l'outil,

**caractérisé en ce que** le procédé mis en œuvre par ordinateur comprend en outre :

(d) le calcul d'une vitesse de véhicule $v_v$, dans lequel la vitesse est un taux de changement de position par unité de temps, et un taux de changement de cap de véhicule par unité de temps $R_v$ sur la base des données positionnelles reçues en provenance du premier récepteur GPS ;

(e) la mise à jour du modèle en calculant :

(i) une position et un cap de véhicule modélisés $p_{v,n}$, $h_{v,n}$ à un temps futur, dans lequel $p_{v,n}$ est basée sur $p_{v,n-1}$ et $v_v$, et dans lequel $h_{v,n}$ est basé sur $h_{v,n-1}$ et $r_v$ ;

(ii) une position d'outil modélisée $p_{t,n}$ au temps futur, dans lequel $p_{t,n}$ est basée sur $p_{t,n-1}$, $h_{t,n-1}$ et $P_{v,n}$, $h_{v,n}$ ; et

dans lequel, dans l'étape (c), le signal de commande est basé sur $p_{t,n}$.

2. Procédé de la revendication 1, dans lequel, dans l'étape (e), la mise à jour du modèle inclut en outre le calcul d'un cap d'outil modélisée $h_{t,n}$ au temps futur, dans lequel $h_{t,n}$ est basé sur $h_{t,n-1}$ et $p_{v,n}$, $h_{v,n}$, et, dans l'étape (c), le signal de commande est en outre basé sur $h_{t,n}$.

3. Procédé de la revendication 2, dans lequel le procédé comprend en outre, au temps initial ou après celui-ci, la réception de données positionnelles en provenance d'un second récepteur GPS fixé à l'outil (16) afin de se mouvoir en tandem avec l'outil, et, dans l'étape (e) (ii), $p_{t,n}$ est en outre basée sur une position d'outil $p_t$ déterminée à partir des données positionnelles reçues en provenance du second récepteur GPS, et $h_{t,n}$ est en outre basé sur un cap d'outil $h_t$ déterminé à partir des données positionnelles reçues en provenance du second récepteur GPS.

4. Procédé de l'une quelconque des revendications 1 à 3, dans lequel, dans l'étape (e) (i), $p_{v,n}$ est en outre sur une position de véhicule $p_v$ déterminée à partir des données positionnelles reçues en provenance du premier récepteur GPS (400), et $h_{v,n}$ est en outre basé sur un cap de véhicule $h_v$ déterminé à partir des données de position reçues en provenance du premier récepteur GPS.

5. Système pour commander un outil agricole (16) remorqué par un véhicule fixé de façon pivotante (18), le système comprenant :

un premier récepteur GPS (400) fixé au véhicule afin de se mouvoir en tandem avec le véhicule ;
un processeur (500) connecté de façon opérationnelle au premier récepteur GPS pour recevoir des données positionnelles en provenance de celui-ci ; et
un support tangible non transitoire lisible par ordinateur stockant des instructions lisibles par le processeur pour mettre en œuvre un procédé comprenant les étapes suivantes :

(a) le stockage, dans une mémoire, d'un modèle comprenant :

(i) une position et un cap de véhicule modélisés $p_{v,n-1}$, $h_{v,n-1}$ à un temps initial ; et
(ii) une position et un cap d'outil modélisés $p_{t,n-1}$, $h_{t,n-1}$ au temps initial ;

(b) au temps initial ou après celui-ci, la réception de données positionnelles en provenance du premier récepteur GPS ; et
(c) la génération d'un signal de commande pour commander un actionneur (32a-32c) associé à l'outil,

**caractérisé en ce que** le procédé comprend en outre :

(d) le calcul d'une vitesse de véhicule $v_v$, dans lequel la vitesse est un taux de changement de position par unité de temps, et un taux de changement de cap de véhicule par unité de temps $R_v$ sur la base des données positionnelles reçues en provenance du premier récepteur GPS ;
(e) la mise à jour du modèle en calculant :

(i) une position et un cap de véhicule modélisés $p_{v,n}$, $h_{v,n}$ à un temps futur, dans lequel $p_{v,n}$ est basée sur $p_{v,n-1}$ et $v_v$, et $h_{v,n}$ est basé sur $h_{v,n-1}$ et $r_v$ ;
(ii) une position d'outil modélisée $p_{t,n}$ au temps futur, dans lequel $p_{t,n}$ est basée sur $p_{t,n-1}$, $h_{t,n-1}$ et $p_{v,n}$, $h_{v,n}$ ;

et

dans lequel, dans l'étape (c), le signal de commande est basé sur $p_{t,n}$.

6. Système de la revendication 5, dans lequel, dans l'étape (e), la mise à jour du modèle inclut en outre le calcul d'un cap d'outil modélisée $h_{t,n}$ au temps futur, dans lequel $h_{t,n}$ est basé sur $h_{t,n-1}$ et $p_{v,n}$, $h_{v,n}$ et, dans l'étape (c), le signal de commande est en outre basé sur $h_{t,n}$.

7. Système de la revendication 6, dans lequel :

le système comprend en outre un second récepteur GPS (402) fixé à l'outil (16) afin de se mouvoir en tandem avec l'outil, dans lequel le processeur (500) est connecté de façon opérationnelle au second récepteur GPS pour recevoir des données positionnelles en provenance de celui-ci ; et
le procédé comprend en outre, au temps initial ou après celui-ci, la réception de données positionnelles en provenance du second récepteur GPS, et, dans l'étape (e) (ii), $p_{t,n}$ est en outre basée sur une position d'outil $p_t$ déterminée à partir des données positionnelles reçues en provenance du second récepteur GPS, et $h_{t,n}$ déterminé à partir des données positionnelles reçues en provenance du second récepteur GPS.

8. Système de l'une quelconque des revendications 5 à 7, dans lequel, dans l'étape (e) (i), $p_{v,n}$ est en outre basée sur une position de véhicule $p_v$ déterminée à partir des données positionnelles reçues en provenance du premier récepteur GPS (400), et $h_{v,n}$ est en outre basé sur un cap de véhicule $h_v$ déterminé à partir des données positionnelles reçues en provenance du premier récepteur GPS.

9. Produit programme d'ordinateur pour commander un outil agricole (16) remorqué par un véhicule fixé de façon pivotante (18), le produit programme d'ordinateur comprenant un support tangible non transitoire lisible par ordinateur stockant des instructions lisibles par un processeur (500) connecté de façon opérationnelle à un premier récepteur GPS (400) fixé au véhicule afin de se mouvoir en tandem avec le véhicule, pour mettre en œuvre un procédé comprenant les étapes suivantes :

(a) le stockage, dans une mémoire, d'un modèle comprenant :

(i) une position et un cap de véhicule modélisés $p_{v,n-1}$, $h_{v,n-1}$ à un temps initial ; et
(ii) une position et un cap d'outil modélisés $p_{t,n-1}$, $h_{t,n-1}$ au temps initial ;

(b) au temps initial ou après celui-ci, la réception de données positionnelles en provenance du premier récepteur GPS ; et
(c) la génération d'un signal de commande pour commander un actionneur (32a-32c) associé à l'outil,

**caractérisé en ce que** le procédé comprend en outre :

(d) le calcul d'une vitesse de véhicule $v_v$, dans lequel la vitesse est un taux de changement de position par unité de temps, et un taux de changement de cap de véhicule par unité de temps $R_v$ sur la base des données positionnelles reçues en provenance du premier récepteur GPS ;
(e) la mise à jour du modèle en calculant :

(i) une position et un cap de véhicule modélisés $p_{v,n}$, $h_{v,n}$ à un temps futur, dans lequel $p_{v,n}$ est basée sur $p_{v,n-1}$ et $v_v$, et $h_{v,n}$ est basé sur $h_{v,n-1}$ et $r_v$ ;
(ii) une position d'outil modélisée $p_{t,n}$ au temps futur, dans lequel $p_{t,n}$ est basée sur $p_{t,n-1}$, $h_{t,n-1}$ et $p_{v,n}$, $h_{v,n}$ ; et

dans lequel, dans l'étape (c), le signal de commande est basé sur $p_{t,n}$.

10. Produit programme d'ordinateur de la revendication 9, dans lequel, dans l'étape (e), la mise à jour du modèle inclut en outre le calcul d'un cap d'outil modélisée $h_{t,n}$ au temps futur, dans lequel $h_{t,n}$ est basé sur $h_{t,n-1}$ et $p_{v,n}$, $h_{v,n}$ et, dans l'étape (c), le signal de commande est en outre basé sur $h_{t,n}$.

11. Produit programme d'ordinateur de la revendication 10, dans lequel le processeur (500) est connecté de façon opérationnelle à un second récepteur GPS (402) fixé à l'outil (16) afin de se mouvoir en tandem avec l'outil, et le procédé comprend en outre, au temps initial ou après celui-ci, la réception de données positionnelles en provenance du second récepteur GPS, et dans l'étape (e) (ii), $p_{t,n}$ est en outre basée sur une position d'outil $p_t$ déterminée à partir des données positionnelles reçues en provenance du second récepteur GPS, et $h_{t,n}$ est en outre basé sur un cap

d'outil $h_t$ déterminé à partir des données positionnelles reçues en provenance du second récepteur GPS.

12. Produit programme d'ordinateur de l'une quelconque des revendications 9 à 11, dans lequel, dans l'étape (e) (i), $p_{v,n}$ en outre basée sur une position de véhicule $p_v$ déterminée à partir des données positionnelles reçues en provenance du premier récepteur GPS (400), et $h_{v,n}$ est en outre basé sur un cap de véhicule $h_v$ déterminé à partir des données positionnelles reçues en provenance du premier récepteur GPS.

FIG. 1
PRIOR ART

FIG. 2
PRIOR ART

FIG. 3
PRIOR ART

**FIG. 4A**

**FIG. 4B**

**FIG. 5**

600

602 — ◇ Is new GPS data available? — No

Yes

604 — Process GPS data to determine kinematic parameters of vehicle and tool

606 — Is vehicle travelling in either straight or a turnaround path? — Straight or turnaround path

NOT (straight or turnaround path)

610 — Update model of vehicle and tool, based on kinematic parameters of vehicle

608 — Update model of vehicle and tool, based on "alternative approach"

612 — Correct updated model of vehicle and tool, based on kinematic parameters of tool

614 — Output updated tool position and optionally tool heading (from step 608, 610, or 612) to tool control module for generating control signal for tool actuator

**FIG. 6**

18

22

Rotation
(turn rate * time)

Distance driven
(velocity * time)

**FIG. 7A**

Previous Tractor Position

Previous Implement
Attitude

18

18'

**FIG. 7B**

Translated Tractor Position

18"

18

22

Rotation Point
(Rear Axle)

22"

18'

**FIG. 7C**

Translated and Rotated Tractor Position

New Tractor Attitude

18b          18a

22

Arc Angle
(turn rate * time)

Arc Distance
(velocity * time)

**FIG. 8A**

Previous Tractor Position

Previous Implement
Attitude

18a'

Updated Front
Section Position and
Heading

18b

22

**FIG. 8B**

Updated Rear
Section Position and
Heading

18a'

18b'

22"

**FIG. 8C**

FIG. 9A

Hitch "Pull" Distance
Updated Hitch Position
22"
"Pull" Perpendicular Rejection
22
"Pull" Parallel Projection
Previous Implement Position
Previous Leading Hitch Position
Previous Implement Attitude
16

FIG. 9B

16
22"
22
Translated Implement Position
16'

FIG. 9C

16"
Rotation Point
22"
θ
d
16
Translated and Rotated Implement Position
16'
New Implement Attitude

18

Tractor

Aircart

Implement

16

1.) Toolbar Heading Correction

**FIG. 10A**

18'

Tractor

Tractor

Aircart

Aircart

Implement

Implement

16'

2.) Toolbar Position Correction

**FIG. 10B**

18"

18'

Tractor Tractor

22

3.) Tractor Heading Correction

**FIG. 10C**

Legend

position and heading of tool based on GPS receiver 402 attached to tool

position and heading of vehicle based on GPS receiver 400 attached to vehicle

uncorrected, updated position and heading

**FIG. 11A**
**PRIOR ART**

**FIG. 11B**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9374939 B2
- US 2008195268 A1
- US 8190364 B2
- EP 3364265 A1
- SE 536166 C2, Gilstring
- WO 2012115563 A1